# EUROPÄISCHE PATENTSCHRIFT

(11) **EP 3 683 032 B1**
(45) Veröffentlichungstag und Bekanntmachung des Hinweises auf die Patenterteilung: **20.10.2021**
(21) Anmeldenummer: 19163332.0
(22) Anmeldetag: 18.03.2019
(51) Int. Cl.: B29C 45/14, B29C 45/00, B29K 105/16, B29K 505/00, B29K 705/00, B29K 705/14, B29L 9/00, B32B 37/15, A47G 29/12, A47G 29/14

(54) **VERFAHREN ZUR HERSTELLUNG EINES BRIEFKASTENS**
METHOD FOR PRODUCING A POSTBOX
PROCÉDÉ DE FABRICATION D'UNE BOÎTE AUX LETTRES

(30) Priorität: 17.01.2019 DE 102019101230
(43) Veröffentlichungstag der Anmeldung: 22.07.2020
(73) Patentinhaber: BURG-WÄCHTER KG, 58540 Meinerzhagen (DE)
(72) Erfinder: Lüling, Harald, 58540 Meinerzhagen (DE)
(74) Vertreter: Brinkmann & Partner

(56) Entgegenhaltungen:
- DE-A1- 10 343 259
- DE-A1-102011 016 757
- JP-A- 2009 173 864
- JP-U- H04 102 294
- US-A1- 2005 269 740
- US-A1- 2010 116 875

## Beschreibung

Die Erfindung betrifft ein Verfahren zur Herstellung eines Briefkastens.

Briefkästen in hochwertiger Optik, insbesondere Metalloptik sind im Markt besonders nachgefragt. Üblicherweise werden solche Briefkästen vollständig aus Blech, insbesondere Edelstahlblech hergestellt. Nachteilig hierbei ist jedoch der vergleichsweise hohe Materialbedarf an Metallen. Ein weiterer Nachteil ist der vergleichsweise große Aufwand bei der Fertigung, der üblicherweise Kant- und Schweißarbeiten umfasst. Schweißfertigungen verbrauchen vergleichsweise viel Energie und erfordern einen bestimmten Automatisierungsgrad. Der hohe Bedarf an Metallen und die aufwendige Fertigung führen zu einem Vergleichsweise hohen Stückpreis solcher Briefkästen.

Ferner ist aus der JP H04 10 2294 U ein Verfahren zur Herstellung eines Briefkastens aus verschiedenen Komponenten bekannt. Die Komponenten sind aus Kunstharz einerseits und einer Metallplatte andererseits gebildet. Metallplatte und Kunstharz werden zur Herstellung der Komponente in eine Gussform eingebracht, wobei das Kunstharz während seiner Ausformung mit der Metallplatte in Berührung ist.

Zur Verringerung des Ressourcenverbrauchs und zur Reduzierung der Fertigungskosten ist es bekannt, bestimmte Bauteile aus Kunststoff zu fertigen und anschließend mit einer metallischen Beschichtung zu versehen. Die Qualität der Beschichtungen hat sich im praktischen Einsatz im Bereich von Briefkästen, insbesondere im Outdoor-Segment, jedoch nicht als ausreichend erwiesen. Dies insbesondere deshalb, da die metallischen Beschichtungen der mechanischen Belastung im Bereich der beweglichen Teile langfristig nicht standhalten können. Auch ist die Witterungsbeständigkeit problematisch. Zwar wurde vorgeschlagen, die Metallschicht mit einer transparenten Schicht aus Kunstharz zu versiegeln, jedoch werden hierdurch die metallische Optik und Haptik in nachteiliger Weise beeinträchtig.

Es ist aus dem Stand der Technik im Zusammenhang mit Beschichtungsverfahren insbesondere der Wassertransferdruck bekannt. Dieser Prozess wird überwiegend in der Automobilindustrie zur Herstellung von Kunststoffteilen in Metall- oder Holzoptik eingesetzt. Auch dieser Prozess hat den Nachteil üblicher Beschichtungsverfahren.

Darüber hinaus ist er derart aufwendig, dass die bei Briefkästen erforderlichen Stückzahlen in der Massenfertigung nicht betriebswirtschaftlich sinnvoll erreicht werden können.

Ferner sind aus dem Stand der Technik Briefkästen aus Kunststoff bekannt, die mit an sich bekannten Urformverfahren im Kunststoffbereich hergestellt werden. Hierbei werden Formteile, nämlich Teile eines Briefkastens aus Kunststoffen hergestellt, die von der chemischen Industrie als Granulat geliefert werden. Als Urformen bezeichnet man das Herstellen fester geometrischer Körper aus formlosen Stoffen, wie Schmelzen. Das in diesem Bereich wichtigste Urformverfahren ist das Spritzgießen. Beim Spritzgießen wird der Kunststoff aus einem Plastifiziergerät (erwärmt den Kunststoff auf Schmelztemperatur) in einen auch Kavität genannten Hohlraum (Formwerkzeug) gespritzt, in welchem der Kunststoff verdichtet wird und anschließt abkühlt und aushärtet, bevor das Formteil entnommen wird.

Neben dem Spritzgießen sind weitere Urformverfahren, wie Extrudieren, Rotationsformen, Spritzblasformen und Schäumen bekannt. Soweit nachfolgende ein Urformverfahren genannt ist sind alternative Urformverfahren miterfasst, soweit eine Übertragung von Verfahrensschritten auf alternative Urformverfahren technisch ausgeschlossen ist.

Der Erfindung liegt damit die **Aufgabe** zugrunde ein Verfahren anzugeben, mit welchem im Vergleich zum Stand der Technik Fertigungsaufwand und Materialbedarf und damit Herstellungskosten gesenkt werden, ohne Qualitätseinbußen hinnehmen zu müssen und gleichzeitig eine optische qualitativ hochwertige Anmutung zu erzielen.

Zur **Lösung** der Aufgabe schlägt die Erfindung ein Verfahren zur Herstellung eines Briefkastens gemäß Anspruch 1 vor. Der Vorteil des erfindungsgemäßen Verfahrens liegt darin, dass die Vorderseite der Folie mit beliebiger Optik und Haptik ausgebildet sein kann. Dies können Muster, Farben oder anderweitig speziell ausgebildete Oberflächen sein. Insbesondere ist es hierdurch möglich, einen Briefkasten aus Kunststoff in hochwertiger Metalloptik herzustellen. Hierfür ist es bevorzugt, dass die Vorderseite der Folie eine zumindest optisch metallische Oberfläche aufweist. Hierdurch kann auf eine aufwändige Beschichtung verzichtet werden. Es ist in diesem Zusammenhang besonders bevorzugt, dass die Oberfläche mit Edelstahloptik ausgebildet ist. Bei der Vorderseite der Folie kann es sich vorzugsweise um eine Folienschicht aus Metall, insbesondere aus Edelstahl handeln. Die Schicht ist vorzugsweise unversiegelt. Alternativ kann die Folie insgesamt als Metallfolie, insbesondere als Edelstahlfolie, ausgebildet sein. In beiden Fällen ergibt sich in synergetischer Kombination mit dem auf die Rückseite aufgespritzten Kunststoff für die Vorderseite, welche die benutzerseitige Außenseite wenigstens einer der Komponenten des Briefkastens bildet, eine Metalloberfläche, welche optisch und haptisch mit einem aus dem Stand der Technik bekannten Metallblech identisch ist. Die Oberflächeneigenschaften werden dabei durch die Vorderseite der Folie geschaffen, während die mechanische Stabilität durch die aufgespritzte Kunststoffstruktur erreicht wird. Durch die erfindungsgemäße Ausbildung als Folie kann im Vergleich zur Verwendung von Blechen vergleichsweise viel metallisches Material eingespart werden. Das Verfahren ist insoweit vorzugsweise vollständig frei von der Verarbeitung von Metall ausgestaltet, als das als Material für die herzustellenden Briefkästen keine Metallbleche verwendet werden. Es ist damit insgesamt ein Verfahren zur Herstellung eines Briefkastens realisiert, mit welchem sowohl teures Material, wie Metall gespart und der Fertigungsaufwand gesenkt werden können, ohne dass die Qualität darunter leidet. Dennoch wird eine optisch hochwertige Anmutung erzielt.

Es hat sich bei dem erfindungsgemäßen Verfahren gezeigt, dass die Kanten der Komponenten nicht ohne Mehraufwand von der Folie gebildet werden können. Dies deshalb nicht, da die Folie hierfür vergleichsweise stark umgebogen werden müsste und ein Hinterspritzen in einem Eckbereich sehr aufwändig ist, soweit hohe Qualitätsanforderungen gestellt werden. Es hat sich in diesem Zusammenhang als vorteilhaft erwiesen, die Kanten der Komponenten aus Kunststoff zu bilden. Es ist hierfür erfindungsgemäß vorgesehen, dass beim Urformen, insbesondere Spritzgießen wenigstens eine der Folienkanten mit dem Kunststoff umfasst, insbesondere umspritzt wird. Die Folie wird hierdurch im Ergebnis in den Kunststoff eingebettet. "Umspritzen" im Sinne der Erfindung bezeichnet dabei, dass der Kunststoff im Kantenbereich der Folie ein L-förmiges Profil oder ein U-förmiges Profil bildet. Im Falle des L-förmigen Profils ist Kunststoff unterhalb der Folienkante und neben der Folienkante angeordnet. Im Falle des U-förmigen Profils ist Kunststoff unterhalb der Folienkante, neben der Folienkante und Oberhalb der Folienkante angeordnet. Dabei ist die Folienkante in einer von dem U-förmigen Profil gebildeten Nut angeordnet. Dies verbessert in vorteilhafter Weise die Anhaftung der Folie am Kunststoff.

Gemäß einem besonders bevorzugten Merkmal der Erfindung ist es vorgesehen, dass der Kunststoff eine Optik, insbesondere eine Farbgebung aufweist, die an die Optik der Folienvorderseite angepasst, insbesondere angeglichen ist. Bevorzugt weist der Kunststoff dabei eine an die Metalloptik, vorzugsweise an eine Edelstahloptik, angepasste bevorzugte identische Farbgebung auf. Hierdurch können insbesondere diejenigen Teile des Briefkastens, die bestimmungsgemäß nicht regelmäßig vom Benutzer berührt werden aus Kunststoff gebildet sein und es werden aufwändige Verfahrensschritte beim Einlegen der Folien in die Form vermieden. Wenngleich die Haptik in diesen Bereichen nicht derjenigen der Folienvorderseite entspricht, ist zumindest optisch ein homogenes Erscheinungsbild gewahrt. Durch sehr schmal ausgebildete Kantenbereiche werden die Flächen nicht derart groß, dass Strukturen, wie beispielsweise bei Metall vorhanden aufwändig nachgebildet werden müssen. Dies verringert Materialbedarf und Herstellungsaufwand in vorteilhafter Weise. Von besonderem Vorteil ist dies in der bevorzugten Ausgestaltung, in welcher die Kanten der Komponenten nicht aus der Folie, sondern aus Kunststoff gebildet sind. In diesem Fall ist fertigungsbedingt ein Teil der Vorderseite aus dem Kunststoff gebildet. Dadurch, dass der Kunststoff optisch der Vorderseite des Kunststoffs entspricht, kann ein optischer Bruch im Kantenbereich der Folie vermieden werden.

Gemäß einem bevorzugten Merkmal der Erfindung wird als Kunststoff beim Urformen, insbesondere Spritzgießen ein solcher eingesetzt, welcher ein metallisches Pigment aufweist. Hierdurch kann eine auf die Folienvorderseite abgestimmte metallische Optik realisiert werden. Vorzugsweise weist der Kunststoff dabei ein Edelstahlpigment auf. Alternativ können in Abhängigkeit des gewünschten äußeren Erscheinungsbildes auch gerade solche metallischen Pigmente eingesetzt werden, welche mit der metallischen Optik der Folie nicht identisch sind. Beispielsweise kann die Folie eine Edelstahloptik aufweisen, während der Kunststoff eine Kupfer-, Bronze-, Gold- und/oder Silberoptik aufweist. Auch ein beliebiger Metallicfarbton ist möglich. Gleichwohl ist es bevorzugt, wenn die Metalloptik von Folie und Kunststoff insoweit aufeinander abgestimmt sind, dass sie identisch sind.

Alternativ oder in Kombination mit der Verwendung von einem Kunststoff aufweisend Metallpigmente kann es bevorzugt sein, den Kunststoff noch während des Spritzgießens oder danach mit einer - im Unterschied zur Folie - nicht-selbsttragenden Metallschicht zu beschichten. Hierdurch ist es möglich, die Qualität der Kunststoffoberfläche hinsichtlich ihrer metallischen Optik weiter zu verbessern. Auch kann eine auf die Folienvorderseite abgestimmte metallische Optik des Kunststoffs realisiert werden. Vorzugsweise ist die Metallschicht dabei eine Edelstahlschicht. Alternativ kann in Abhängigkeit des gewünschten äußeren Erscheinungsbildes auch gerade eine metallische Beschichtung eingesetzt werden, welche mit der metallischen Optik der Folie nicht identisch ist. Beispielsweise kann die Folie eine Edelstahloptik aufweisen, während die Beschichtung eine Kupfer-, Bronze-, Gold- und/oder Silberoptik aufweist. Auch ein beliebiger Metallicfarbton ist möglich. Gleichwohl ist es bevorzugt, wenn die Metalloptik von Folie und Beschichtung insoweit aufeinander abgestimmt sind, dass sie identisch sind. Es hat sich gezeigt, dass die mechanische Stabilität der metallischen Beschichtung verbessert werden kann, wenn der Kunststoff ein solcher ist, der metallische Pigmente aufweist.

Bekanntermaßen können insbesondere im Spritzgussverfahren thermoplastische Kunststoffe verarbeitet werden. Mit Bezug auf die für Briefkästen erforderliche mechanische Stabilität und die bevorzugt zu erreichende Metalloptik hat es sich als besonders vorteilhaft erwiesen, als Basiskunststoffe PS (Polystyrol), ABS (Acryl-Butadien-Styrol), PA (Polyamid) oder POM (Polyoxymethylen) einzusetzen. Insbesondere ABS hat besonders positive Ergebnisse mit Bezug auf die eingesetzten Metallpigmente gezeigt, so dass eine besonders hochwertige Metalloptik erreicht werden konnte.

Weitere Merkmale der Erfindung und vorteilhafte Ausgestaltungen ergeben sich aus der nachfolgenden Beschreibung der zugehörigen Zeichnung. In der Zeichnung zeigen:
- Fig. 1: eine Vorrichtung zur Durchführung eines erfindungsgemäßen Verfahrens in schematischer Seitenansicht in einer ersten Stellung;
- Fig. 2: die Vorrichtung gemäß Fig. 1 in einer zweiten Stellung;
- Fig. 3: die Vorrichtung gemäß den Figuren 1 und 2 in einer dritten Stellung und
- Fig. 4: die Vorrichtung gemäß den Figuren 1 bis 3 in einer vierten Stellung.

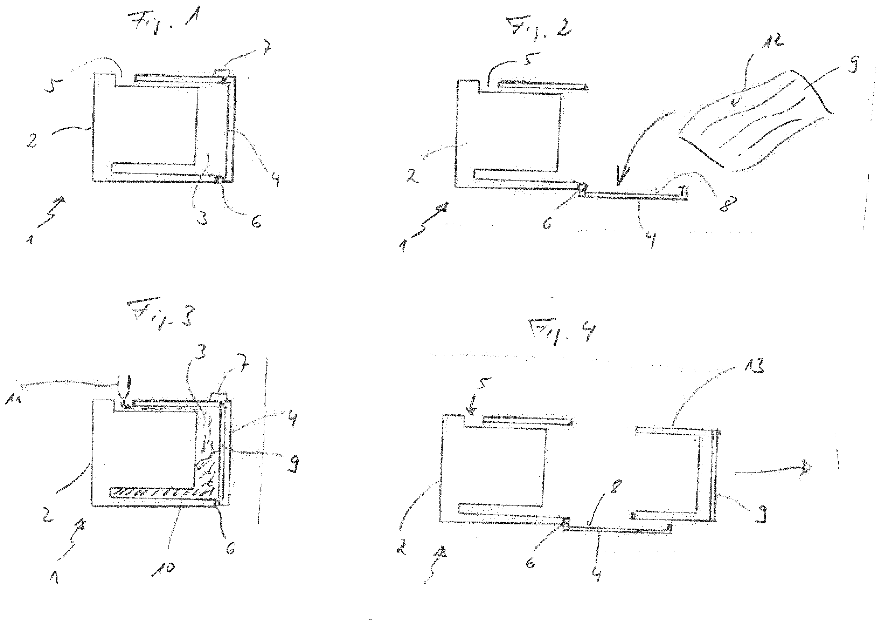

Fig. 1 zeigt eine Vorrichtung 1 zur Herstellung einer Komponente 13 eines Briefkastens im Spritzgießverfahren. Die Vorrichtung 1 besteht aus einem Gehäuse 2 mit einer Kavität 3, deren Form mit der Form der herzustellenden Komponente 13 des Briefkastens übereinstimmt. Das Gehäuse 2 weist eine mit einer Klappe 4 verschließbare Öffnung sowie eine Öffnung 5 zum Einbringen eines liquiden Kunststoffes auf.

Die Klappe 4 ist um eine Schwenkachse 6 schwenkbeweglich am Gehäuse 2 angeordnet und mittels einer Verriegelungseinrichtung 7 mit dem Gehäuse fest verschließbar.

Die Fig. 1 zeigt hier eine schematische Ausgestaltung einer derartigen Vorrichtung 1. Selbstverständlich sind vielfältige Änderungen und Abwandlungen möglich. In der Regel werden erfindungsgemäße Verfahren derart ausgeführt, dass in einem kontinuierlichen Prozess eine Vielzahl gleicher Komponenten 13 mit einer entsprechenden Vorrichtung in schneller Reihenfolge hergestellt werden, so dass insbesondere bei dem nachfolgend beschriebenen Verfahren ein schnelles Einbringen der Kunststoffschmelze, ein schnelles Aushärten und ein schnelles Entnehmen der fertigen Komponente 13 des Briefkastens erforderlich sein werden.

Fig. 1 zeigt die Vorrichtung in der Ausgangsposition, in der die Kavität 3 nicht gefüllt ist.

Fig. 2 zeigt die Vorrichtung 1 gemäß Fig. 1 mit geöffneter Klappe 4, die horizontal ausgerichtet ist und auf deren Innenfläche 8 eine Folie 9 angeordnet wird. Die Folie 9 weist eine flächige Vorderseite und eine flächige Rückseite auf und wird in der Klappe 4, d.h. auf der Innenfläche 8 angeordnet und in der Klappe 4 derart gehalten, dass ein Faltenwurf der Folie 9 auch dann verhindert ist, wenn die Kunststoffschmelze 10 gemäß Fig. 3 über eine Spritzvorrichtung 11 in die Kavität 3 eingespritzt wird.

Beispielsweise kann die Folie 9 mit entsprechenden Halterungen im Bereich der Innenfläche 8 der Klappe 4 aufgespannt sein.

Die Folie 9 weist eine Oberfläche 12 auf, die optisch metallisch ausgebildet ist. Die Oberfläche 12 wird der Kavität 3 abgewandt in die Klappe 4 eingelegt, so dass die Oberfläche 12 auf der Innenfläche 8 der Klappe 4 aufliegt.

Nachdem die Folie 9 bestimmungsgemäß in der Klappe 4 angeordnet ist, wird die Klappe 4 derart verschwenkt, dass die Kavität 3 vollständig abgeschlossen ist. Die Klappe 4 wird über die Verriegelungseinrichtung 7 mit dem Gehäuse 2 derart dicht verschlossen, dass die nachfolgend eingebrachte Kunststoffschmelze 10 gemäß Fig. 3 nicht aus dem Gehäuse 2 austritt.

Das Einbringen der Kunststoffschmelze 10 erfolgt unter einem Einspritzdruck. Nachdem die Kavität 3 mit der Kunststoffschmelze 10 vollständig und bestimmungsgemäß befüllt ist, wird der Druck in der Kavität 3 auf den Enddruck zur Aushärtung der Kunststoffschmelze 10 angehoben. Ergänzend kann zur Aushärtung des Kunststoffs das Gehäuse 2 insbesondere im Bereich der die Kavität 3 begrenzenden Flächen gekühlt werden, um den Aushärtevorgang zu beschleunigen. Während des Aushärtevorgangs verbindet sich die Kunststoffschmelze 10 mit der Folie 9.

Nach dem Aushärten der Kunststoffschmelze 10 wird die Klappe 4 gemäß Fig. 4 wieder geöffnet und die Komponente 13 des Briefkastens entnommen. Nach Entnahme der Komponente 13 ist die Vorrichtung 1 zur Aufnahme einer weiteren Folie 9 gemäß Fig. 2 vorbereitet.

Es hat sich herausgestellt, dass die Herstellung von Komponenten 13 mit einer Folie 9, die optisch metallisch ausgebildet und damit beispielsweise eine Edelstahloberfläche nachbildet, dadurch vereinfacht werden kann, dass die Fläche der Folie geringfügig kleiner ausgebildet ist als die Fläche, die mit der Folie 9 abgedeckt wird. Um dennoch insgesamt ein Erscheinungsbild der Komponente 13 mit einer Edelstahlanmutung zu erzielen ist vorgesehen, dass die Kunststoffschmelze 10 farblich an die metallische Ausgestaltung der Folie 9 angepasst ist. Hierzu kann die Kunststoffschmelze 10 beispielsweise metallische Pigmente aufweisen, die der Kunststoffschmelze 10 vor dem Einbringen in die Kavität 3 zugesetzt werden. Des Weiteren ist es vorteilhaft für die optische Wirkung, die Randbereiche der Komponente 13, die nicht von der Folie 9 abgedeckt werden, möglichst schmal, insbesondere im Bereich weniger Millimeter und gleichmäßig auszubilden.

### Bezugszeichenliste

- 1: Vorrichtung
- 2: Gehäuse
- 3: Kavität
- 4: Klappe
- 5: Öffnung
- 6: Schwenkachse
- 7: Verriegelungseinrichtung
- 8: Innenfläche
- 9: Folie
- 10: Kunststoffschmelze
- 11: Spritzvorrichtung
- 12: Oberfläche
- 13: Komponente

## Patentansprüche

1. Verfahren zur Herstellung eines Briefkastens mit einzelnen Komponenten wenigstens in Form eines Gehäuses, einer Entnahmeklappe und/oder einer Einwurfklappe, bei dem wenigstens eine der Komponenten mittels einem Kunststoffurformverfahren hergestellt wird, **dadurch gekennzeichnet, dass** zunächst eine Folie (9) aufweisend eine flächige Vorderseite und eine flächige Rückseite in einer Kavität (3) einer Urform angeordnet wird und dass auf die Rückseite der Folie anschließend ein Kunststoff aufgebracht wird, wobei wenigstens eine Kante der wenigstens einen Komponente (13) aus Kunststoff gebildet ist und wobei beim Aufbringen des Kunststoffs wenigstens eine der Folienkanten mit dem Kunststoff umhüllt wird.

2. Verfahren nach Anspruch 1, **dadurch gekennzeichnet, dass** die Vorderseite der Folie (9) eine zumindest optisch metallische Oberfläche (12), insbesondere Edelstahloberfläche, aufweist.

3. Verfahren nach einem der Ansprüche 1 oder 2, **dadurch gekennzeichnet, dass** die Folie (9) als Metallfolie, insbesondere Edelstahlfolie, ausgebildet ist.

4. Verfahren nach einem der Ansprüche 1 bis 3, **dadurch gekennzeichnet, dass** als Kunststoff ein Kunststoff aufweisend ein metallisches Pigment eingesetzt wird.

5. Verfahren nach einem der Ansprüche 1 bis 4, **dadurch gekennzeichnet, dass** der Kunststoff während oder nach dem Aufbringen in Form von Spritzgießen mit einer Metallschicht beschichtet wird.

6. Verfahren nach einem der Ansprüche 4 oder 5, **dadurch gekennzeichnet, dass** das metallische Pigment und/oder die Metallschicht so gewählt werden, dass sie optisch der metallischen Oberfläche (12) der Folienvorderseite entsprechen.

7. Verfahren nach einem der Ansprüche 1 bis 6, **dadurch gekennzeichnet, dass** der Kunststoff bis zur Schmelztemperatur erwärmt und in die Kavität (3) eingebracht wird, in der die Folie (9) zuvor lagefixiert angeordnet wird, wobei die Schmelztemperatur keine Veränderungen der Folie (9) bewirkt.

8. Verfahren nach einem der Ansprüche 1 bis 7, **dadurch gekennzeichnet, dass** der Kunststoff mit einem definierten Druck, insbesondere einem Einspritzdruck in die Kavität (3) eingebracht wird, in der die Folie (9) zuvor lagefixiert angeordnet wird, und der Kunststoff zusammen mit der Folie (9) unter einem Enddruck in der Kavität (3) ausgehärtet wird, wobei der Einspritzdruck keine Veränderungen der Folie (9) in Länge und/oder Breite und/oder Dicke bewirkt.

## Claims

1. A method for manufacturing a letterbox comprising individual components, at least in the form of a housing, an extraction flap and/or an access flap, in which method at least one of the components is manufactured by means of a plastic original mould process, **characterized in that** at first a foil (9) comprising a planar front side and a planar rear side is arranged in a cavity (3) of an original mould and that a plastic material is afterwards applied onto the rear side of the foil, wherein at least one edge of the at least one component (13) is made of plastic and wherein at least one of the foil edges is wrapped by the plastic during the application of the plastic material.

2. A method according to claim 1, **characterized in that** the front side of the foil (9) comprises an at least optically metallic surface (12), in particular a stainless steel surface.

3. A method according to one of the claims 1 or 2, **characterized in that** the foil (9) is a metal foil, in particular a stainless steel foil.

4. A method according to one of the claims 1 through 3, **characterized in that** a plastic comprising a metallic pigment is used as plastic material.

5. A method according to one of the claims 1 through 4, **characterized in that** the plastic is coated with a metal layer during or after the application by means of injection moulding.

6. A method according to one of the claims 41 or 5, **characterized in that** the metallic pigment and/or the metal layer is/are selected such that they optically correspond to the metallic surface (12) of the front side of the foil.

7. A method according to one of the claims 1 through 6, **characterized in that** the plastic material is heated up to the melting temperature and inserted into the cavity (3), in which the foil (9) has been previously arranged in a position-safe manner, wherein the melting temperature does not cause any changes of the foil (9).

8. A method according to one of the claims 1 through 7, **characterized in that** the plastic material is introduced into the cavity (3) with a defined pressure, in particular an injection pressure, in which cavity the foil (9) has been previously arranged in a position-safe manner, and the plastic material is hardened in the cavity (3) together with the foil (9) under an end pressure, wherein the injection pressure does not cause any changes of the foil (9) with respect to the length and/or width and/or thickness.

## Revendications

1. Procédé de fabrication d'une boîte aux lettres comprenant des composants individuels, au moins sous forme d'un boîtier, d'un clapet de retrait et/ou d'un clapet d'introduction, dans lequel procédé au moins l'un des composants est fabriqué par moyen d'un procédé de moulage original de matière plastique, **caractérisé en ce qu'**on dispose d'abord une feuille (9) comprenant une face avant planaire et une face arrière planaire dans une cavité (3) d'une moule originale, et qu'on applique ensuite une matière plastique sur la face arrière de la feuille, dans lequel au moins un bord de l'au moins un composant (13) est fabriqué en matière plastique, et dans lequel au moins un des bords de la feuille est enveloppé par la matière plastique pendant l'application de la matière plastique.

2. Procédé selon la revendication 1, **caractérisé en ce que** la face avant de la feuille (9) comprend une surface au moins optiquement métallique (12), notamment une surface en acier inoxydable.

3. Procédé selon l'une de la revendication 1 ou la revendication 2, **caractérisé en ce que** la feuille (9) est une feuille métallique, notamment une feuille en acier inoxydable.

4. Procédé selon l'une des revendications 1 à 3, **caractérisé en ce qu'**on utilise une matière plastique comprenant un pigment métallique comme matière plastique.

5. Procédé selon l'une des revendications 1 à 4, **caractérisé en ce que** la matière plastique est revêtue d'une couche métallique pendant ou après l'application par moyen d'un moulage par injection.

6. Procédé selon l'une des revendications 1 à 5, **caractérisé en ce que** le pigment métallique et/ou la couche métallique est/sont sélectionné(s) de sorte qu'ils correspondent de manière optique à la surface métallique (12) de la face avant de la feuille.

7. Procédé selon l'une des revendications 1 à 6, **caractérisé en ce qu'**on chauffe la matière plastique jusqu'à la température de fusion et on l'introduit dans la cavité (3), dans laquelle on a précédemment fixé la feuille (9) en position stable, dans lequel la température de fusion ne cause pas de changements de la feuille (9).

8. Procédé selon l'une des revendications 1 à 7, **caractérisé en ce qu'**on introduit la matière plastique sous une pression définie, notamment une pression d'injection, dans la cavité (3), dans laquelle on a précédemment fixé la feuille (9) en position stable, et on fait durcir la matière plastique ensemble avec la feuille (9) sous une pression finale dans la cavité (3), la pression d'injection ne causant pas de changements de la feuille (9) par rapport à la longueur et/ou à la largeur et/ou à l'épaisseur.
